# EUROPEAN PATENT SPECIFICATION

(11) **EP 3 364 775 B1**
(45) Date of publication and mention of the grant of the patent: **26.05.2021**
(21) Application number: 16784203.8
(22) Date of filing: 20.10.2016
(51) Int. Cl.: A23F 5/40, A23L 2/60, A23L 27/00, A23L 27/30

(54) **METHOD OF MASKING OFF-TASTES WITH CELLOBIOSE AND/OR PSICOSE**
VERFAHREN ZUR VERMINDERUNG DES NACHGESCHMACKS MIT CELLOBIOSE UND/ODER PSICOSE
MÉTHODE POUR MASQUER DES ARRIÈRE-GOÛTS GRÂCE À LA CELLOBIOSE ET/OU LA PSICOSE

(30) Priority: 22.10.2015 US 201562244819 P
(43) Date of publication of application: 29.08.2018
(73) Proprietor: Givaudan SA, 1214 Vernier (CH)
(72) Inventor: UNGUREANU, Ioana Maria, Cincinnati, Ohio 45215 (US); VAN OMMEREN, Esther, 1363 TR Almere (NL)
(74) Representative: Global Patents
(86) International application number: PCT/EP2016/075209
(87) International publication number: WO 2017/068033

(56) References cited:
- WO-A1-2011/143465
- WO-A1-2012/046346
- WO-A1-2012/046348
- WO-A1-2012/169661
- WO-A1-2016/116627
- WO-A1-2016/152818
- WO-A2-2007/061753
- JP-A- 2015 023 803
- US-A1- 2012 021 111
- US-A1- 2012 076 908
- US-A1- 2012 301 594
- US-A1- 2013 059 030
- US-A1- 2014 271 747
- US-A1- 2014 271 996
- US-A1- 2014 342 043
- OSHIMA HISAKA ET AL: "PSICOSE CONTENTS IN VARIOUS FOOD PRODUCTS AND ITS ORIGIN", FOOD SCIENCE AND TECHNOLOGY RESEARCH, KARGER, BASEL, CH, vol. 12, no. 2, 1 January 2006 (2006-01-01), pages 137-143, XP003035928, ISSN: 1344-6606, DOI: 10.3136/FSTR.12.137

## Description

This disclosure relates to a method of suppressing off-notes in high-intensity sweeteners.

Sweetness in comestible products, that is products intended to be taken by mouth either for permanent ingestion or temporarily for expectoration, is often a desirable characteristic.

Traditionally, sweetness has been provided by the addition of a sweetening compound.

Traditionally, this compound has been sucrose. Sucrose has the advantage of delivering considerable sweetness without any undesirable aftertaste. However, it is desired to use less sugar in health or dietary foods, which means in turn the possibility of a drop in sweetness that is unacceptable to consumers.

One way around this is the use of high-intensity sweeteners (HIS). These materials, which may be natural or artificial, have a sweetness which can be several hundred times that of sugar, and can thus theoretically stand in for a much larger quantity of sugar. Examples of typical HIS include saccharin, cyclamate, aspartame, stevioside, rebaudioside A ("Reb A") and sucralose. These substances generally have the drawback that they impart undesirable off-tastes to comestible products, typically bitter or metallic tastes.

It has now been found that off-tastes in comestible compositions, containing high-intensity sweeteners, may be partially or even totally suppressed. There is therefore provided the use of from 20 to 50 ppm of cellobiose as an off-taste masking agent for high-intensity sweetener in a comestible composition comprising high-intensity sweetener.

Cellobiose is a disaccharide of the formula

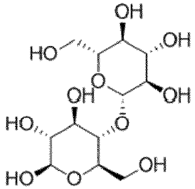

It is an enzymatic degradation product of cellulose, and it is readily available on industrial scale. It has a number of pharmacological uses.

PCT Publication WO 2007/061753 describes a functional sweetening composition, comprising glucosamine (the functional component), along with a high-intensity sweetener and additionally a sweet taste improving composition. The sweet taste improving composition can be selected from a wide variety of materials, including carbohydrates such as cellobiose and psicose.

However, the publication only exemplifies a small proportion of the vast range of sweet taste improving compositions and offers no guidance as to which composition will donate which characteristic in which circumstances. In addition, carbohydrates are stated to be required in concentrations of 1,000-100,000ppm. US 2012/021111 describes natural low caloric sweetener compositions for use in beverages and foods comprising 0.5-10% of a purified Stevia extract and 80-99% of a bulking agent selected from the group consisting of sugar alcohols, disaccharides, and monosaccharides. The disaccharide is selected from the group consisting of maltose, lactose, sucrose, isomaltulose, maltulose, isomaltose, cellobiose, and combinations thereof. The bulking agent is an ingredient that is sweet tasting, possibly masks the bitter and/or after-taste of Stevia extract and allows for dispensing of natural sweetener compositions disclosed herein in manageable quantities. It has been surprisingly found that 20-50 ppm of cellobiose can be used with HIS to mask off-notes, i.e. in concentrations much lower than previously expected.

By "comestible composition base" is meant all the ingredients necessary for the comestible composition, apart from the sweetener(s) and cellobiose/psicose. These will naturally vary in both nature and proportion, depending on the nature and use of the comestible composition, but they are all well known to the art and may be used in art-recognised proportions. The formulation of such a base for every conceivable purpose is therefore within the ordinary skill of the art.

The sweetener may be any suitable sweetener for conferring the desired level of sweetness on the composition. It may be artificial or natural, and in particular embodiments it is a high-intensity sweetener of the type hereinabove described, and which are known to be particularly prone to providing off-tastes in compositions to which they have been added.

The ingredients in a comestible composition base include, but are not limited to, anti-caking agents, anti-foaming agents, anti-oxidants, binders, colourants, diluents, disintegrants, emulsifiers, encapsulating agents or formulations, enzymes, fats, flavour-enhancers, flavouring agents, gums, lubricants, polysaccharides, preservatives, proteins, solubilisers, solvents, stabilisers, sugar-derivatives, surfactants, sweetening agents, vitamins, waxes, and the like. Solvents which may be used are known to those skilled in the art and include e.g. ethanol, ethylene glycol, propylene glycol, glycerine and triacetin. Encapsulants and gums include maltodextrin, gum arabic, alginates, gelatine, modified starch, and polysaccharides.

Examples of additives, excipients, carriers, diluents or solvents for flavour or fragrance compounds may be found e.g. in "Perfume and Flavour Materials of Natural Origin", S. Arctander, Ed., Elizabeth, N.J., 1960; in "Perfume and Flavour Chemicals", S. Arctander, Ed., Vol. I & II, Allured Publishing Corporation, Carol Stream, USA, 1994; in "Flavourings", E. Ziegler and H. Ziegler (ed.), Wiley-VCH Weinheim, 1998, and "CTFA Cosmetic Ingredient Handbook", J.M. Nikitakis (ed.), 1st ed., The Cosmetic, Toiletry and Fragrance Association, Inc., Washington, 1988.

Cellobiose may be used in any kind of edible consumable product with HIS. In particular embodiments, the HIS is selected from rebaudioside A and sucralose. It has been found that, in conjunction with these sweeteners, the desirable effects of cellobiose are especially enhanced.

Non-limiting examples of such consumable products include:
- wet/liquid soups regardless of concentration or container, including frozen soups. For the purpose of this definition soup(s) means a food prepared from meat, poultry, fish, vegetables, grains, fruit and other ingredients, cooked in a liquid which may include visible pieces of some or all of these ingredients. It may be clear (as a broth) or thick (as a chowder), smooth, pureed or chunky, ready-to-serve, semi- condensed or condensed and may be served hot or cold, as a first course or as the main course of a meal or as a between meal snack (sipped like a beverage). Soup may be used as an ingredient for preparing other meal components and may range from broths (consommé) to sauces (cream or cheese-based soups).
- dehydrated and culinary foods, including cooking aid products such as: powders, granules, pastes, concentrated liquid products, including concentrated bouillon, bouillon and bouillon like products in pressed cubes, tablets or powder or granulated form, which are sold separately as a finished product or as an ingredient within a product, sauces and recipe mixes (regardless of technology);
- meal solutions products such as: dehydrated and freeze dried soups, including dehydrated soup mixes, dehydrated instant soups, dehydrated ready-to-cook soups, dehydrated or ambient preparations of ready-made dishes, meals and single serve entrees including pasta, potato and rice dishes
- meal embellishment products such as: condiments, marinades, salad dressings, salad toppings, dips, breading, batter mixes, shelf stable spreads, barbecue sauces, liquid recipe mixes, concentrates, sauces or sauce mixes, including recipe mixes for salad, sold as a finished product or as an ingredient within a product, whether dehydrated, liquid or frozen.
- beverages, including beverage mixes and concentrates, including but not limited to, alcoholic and non-alcoholic ready to drink and dry powdered beverages., carbonated and non-carbonated beverages, e.g., sodas, fruit or vegetable juices, alcoholic and non-alcoholic beverages, confectionery products, e.g., cakes, cookies, pies, candies, chewing gums, gelatins, ice creams, sorbets, puddings, jams, jellies, salad dressings, and other condiments, cereal, and other breakfast foods, canned fruits and fruit sauces and the like.
- milk, cheese, yoghurt and other dairy products.

The disclosure is further described with reference to the following non-limiting examples.

### Examples

### Example (not part of the invention)

In a strawberry-flavoured zero-fat yoghurt, sweetened with aspartame/AceK, psicose was tested at 50 ppm for masking of sweet lingering and other off-notes.

Samples were evaluated by a panel of 6 expert tasters. Tasters were asked to describe the samples focusing on the sweet lingering and other off-notes of HIS.

Base is 0% fat yoghurt, 100 ppm asapartame and 300 ppm AceK, proprietary strawberry flavour @ 0.1%

Base: sweet, ripe strawberry, lingering sweet and licorice

Base plus 50 ppm psicose: reduction of sweet lingering off-notes, reduction of astringency, more strawberry impact, increase in mouthfeel

### Examples 2-8 (with examples 2,4,5 and 8 not part of the invention)

**Masking examples of cellobiose:**

| Example no | base | cellobiose concentration | number of panelists | conclusion |
|---|---|---|---|---|
| 2 | zero fat greek yoghurt | 50 ppm | 5 | masking some of astringency, enhances body, mouthfeel, creaminess |
| 3 | artificially (aspartame/AceK) sweetened yoghurt | 50 ppm | 5 | good masking, enhances body, improves mouthfeel, creaminess |
| 4 | low sugar (50% reduction) instant oatmeal | 50 ppm | 5 | sweeter, fuller, improved mouthfeel, richer, creamier |
| 5 | low sugar (30% reduction) hot cocoa | 50 ppm | 5 | adds body and mouthfeel, improved quality of sweetness |
| 6 | artificially (aspartame/AceK) sweetened iced tea | 50 ppm | 5 | more body, sweeter, nicer quality of sweetness, less astringent |
| 7 | artificially sweetened (sucralose) sweetened hot cocoa | 50 ppm | 5 | masks lingering, less artificial, less bitter, more mouthfeel |
| 8 | black coffee | 50 ppm | 10 | reduced bitterness, more mouthfeel |

### Example 9 (not part of the invention)

### Effect of cellobiose at 30 ppm in low sugar instant oatmeal.

Six trained tasters evaluated low sugar instant oatmeal (33 g instant oats, 375g of boiling water, 0.6 g of salt, 200 mesh and 9 g of sugar, mixed and consumed after sitting at least 2 minutes) and compared to the same low sugar instant oatmeal containing 30 ppm of cellobiose (12.5 mg) consiumed under identical conditions.

The instant oatmeal containing cellobiose was judged to be sweeter with fewer off-notes, and increased body and mouthfeel.

### Example 10 (not part of the invention)

### Testing of psicose in yoghurt.

In a strawberry-flavoured zero-fat yoghurt containing 0.1% by weight proprietary strawberry flavor and sweetened with100ppm Aspartame and 300ppm AceK, psicose was added at 50 ppm.

Samples were evaluated by a panel of 6 expert tasters. Tasters were asked to describe the samples focusing on the sweet lingering and other off notes of HIS.

The yoghurt lacking psicose was assessed by the tasters to be sweet, ripe strawberry, lingering sweet and licorice.

The yoghurt plus 50 ppm psicose was observed to have a reduction of sweet lingering off-notes, reduction of astringency, more strawberry impact and increase in mouthfeel.

## Claims

1. Use of from 20-50ppm of cellobiose as an off-taste masking agent for high-intensity sweetener in a comestible composition comprising high-intensity sweetener.

## Patentansprüche

1. Die Verwendung von 20 - 50 ppm Cellobiose in einer essbaren Zusammensetzung zur Maskierung eines Fehlgeschmacks eines hochintensiven Süssstoffes, wobei die essbare Zusammensetzung einen hochintensiven Süssstoff enthält.

## Revendications

1. Utilisation de cellobiose entre 20 et 50 ppm, en tant qu'agent masquant suppresseur de l'arrière goût pour édulcorant à haute intensité dans des aliments comprenant des édulcorants à haute intensité.
